(19) Europäisches Patentamt
European Patent Office
Office européen des brevets

(11) **EP 3 022 259 B1**

(12) **EUROPEAN PATENT SPECIFICATION**

(45) Date of publication and mention
of the grant of the patent:
**12.12.2018   Bulletin 2018/50**

(21) Application number: **14744729.6**

(22) Date of filing: **11.07.2014**

(51) Int Cl.:
*C08L 23/08* [(2006.01)]     *C08L 23/16* [(2006.01)]
*H01B 3/44* [(2006.01)]     *C08L 23/06* [(2006.01)]
*H01B 7/02* [(2006.01)]     *C08K 5/14* [(2006.01)]
*C08L 23/12* [(2006.01)]

(86) International application number:
**PCT/US2014/046324**

(87) International publication number:
**WO 2015/009562 (22.01.2015 Gazette 2015/03)**

(54) **FLEXIBLE POWER CABLE INSULATION**

FLEXIBLE STROMKABELISOLIERUNG

ISOLATION DE CÂBLE D'ALIMENTATION SOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **16.07.2013   US 201361846792 P**

(43) Date of publication of application:
**25.05.2016   Bulletin 2016/21**

(73) Proprietor: **Dow Global Technologies LLC
Midland, MI 48674 (US)**

(72) Inventors:
• **CHAUDHARY, Bharat I.
Princeton, NJ 08540 (US)**
• **BRIGANDI, Paul J.
Schwenksville, PA 19473 (US)**

• **MAURER, Brian R.
North Wales, PA 19454 (US)**
• **COGEN, Jeffrey M.
Flemington, NJ 08822 (US)**
• **MARCHAND, Gary R.
Gonzales, LA 70737 (US)**
• **DE GRAAF, Michael A.
4331 PR Middelburg (NL)**
• **TOTTE-VAN T. WESTEINDE, Marlies
4501 PT Oostburg (NL)**

(74) Representative: **Boult Wade Tennant LLP
Verulam Gardens
70 Gray's Inn Road
London WC1X 8BT (GB)**

(56) References cited:
**WO-A1-00/01766          WO-A1-2007/019088
WO-A1-2012/174712**

EP 3 022 259 B1

**Description**

FIELD

This invention relates to flexible power cables. In one aspect the invention relates to flexible power cables comprising an insulation layer (sheath) made from a crosslinked composition comprising an ethylene polymer and a propylene polymer.

BACKGROUND

The electrical insulation layers of power cables are predominantly made from peroxide crosslinked low-density polyethylene (XLPE) or peroxide crosslinked and highly filled ethylene propylene rubber (EPR), including ethylene propylene diene monomer (EPDM) based compounds. Compared with XLPE compositions, filled-EPR materials are much more flexible, but result in significantly heavier cables with higher dielectric losses (due to the use of inorganic fillers at loadings as much as 30-55 weight percent (wt%). It would be desirable to make peroxide crosslinkable insulation compositions suitable for use in power cable constructions that combine the flexibility of filled-EPR with the lower mass and better dielectric properties of XLPE. That is, the desired flexible insulation compositions should (a) be more flexible than XLPE, for ease of installation; (b) be lighter than filled EPR, for ease of installation; and (c) have lower dissipation factors than filled EPR at temperatures as high as 130°C, for lower dielectric losses. Additionally, the desired flexible insulation composition should: (a) be melt processable without premature crosslinking, to prevent "scorch" during melt extrusion at temperatures in or near the range of 130°C to 140°C; (b) have sufficiently high melt strength or extensional viscosity at temperatures in or near the range of 130°C to 140°C, to prevent sag after extrusion and before crosslinking in a subsequent continuous vulcanization step; and (c) be sufficiently crosslinked in continuous vulcanization step at an average temperature of 182°C, to be able to pass the hot creep test at temperatures as high as 200°C.

Thermoplastic cable insulations have been developed based on polypropylene as the major component and may contain blends with other polyolefin and propylene copolymer resins (see, for example, WO 2007/019088 and US 2010/0122833A1). One drawback of these compositions is that they are too stiff to be suitable for use in flexible cable applications. Furthermore, they are not able to pass the hot creep test conducted at a temperature of 200°C. Moreover, polypropylene-based systems are typically not crosslinked by peroxides because polypropylene tends to undergo chain scission during crosslinking operations which, in turn, degrades the integrity of insulation sheath at elevated temperatures.

SUMMARY

The issues with the existing technologies are addressed by dispersing minor amounts of polypropylene (PP) in an ethylene polymer matrix, without a necessity to use compatibilizers. The compositions of this invention can be crosslinked with peroxides and processed using existing processes to yield the desired combination of properties for the manufacture and use of medium-voltage power cable insulation (coated conductors), i.e., low density (for light weight and ease of installation); acceptably high extensional viscosity and corresponding Hencky strain at extrusion conditions (required for sag-resistance after extrusion); acceptably high scorch-resistance (to prevent pre-mature crosslinking at extrusion conditions); acceptably high degree of crosslinking after extrusion (in a continuous vulcanization step); sufficiently low flexural modulus (for ease of installation); sufficiently low creep at elevated temperatures (to maintain dimensional integrity during use); adequately low dissipation factor (to minimize electrical losses during use); and acceptably high alternating current (AC) breakdown strength (both unaged and aged).

In one embodiment the invention is a composition comprising in weight percent based on the weight of the composition:

(A) 60-95% of an ethylene polymer of crystallinity of less than 40 percent;
(B) 4 to less than 40% of a propylene polymer with an upper melting point of greater than or equal to ($\geq$) 130°C; and
(C) $\geq$ 0.5% peroxide;

with the proviso that the ethylene polymer either comprises a continuous phase (matrix) within which the propylene polymer is dispersed or is co-continuous with the propylene polymer, wherein the composition has a gel content of greater than or equal to ($\geq$) 60% after crosslinking. In one embodiment the composition is free of compatibilizers. In one embodiment the composition comprises a compatibilizer. In one embodiment the ethylene polymer matrix, after crosslinking with peroxide, has a dissipation factor at 130°C of less than or equal to ($<$) 1%.

In one embodiment the invention is a crosslinked insulation sheath for a cable, the crosslinked insulation sheath made from a composition comprising in weight percent based on the weight of the composition;

(A) 60-95% of an ethylene polymer of crystallinity of less than 40 percent;

(B) 4 to less than 40% of a propylene polymer with an upper melting point of greater than or equal to (≥) 130°C; and

(C) ≥ 0.5% peroxide;

with the proviso that the ethylene polymer either comprises a continuous matrix within which the propylene polymer is dispersed or is co-continuous with the propylene polymer, wherein the composition has a gel content of greater than or equal to (≥) 60% after crosslinking. In one embodiment, the insulation sheath is free of compatibilizers. In one embodiment, the insulation sheath comprises a compatibilizer. In one embodiment, the ethylene polymer matrix, after crosslinking with peroxide, has a dissipation factor at 130°C of less than or equal to (<) 1%.

In one embodiment the invention is a cable comprising a crosslinked insulation sheath made from a composition comprising in weight percent based on the weight of the composition;

(A) 60-95% of an ethylene polymer of crystallinity of less than 40 percent;

(B) 4 to less than 40% of a propylene polymer with an upper melting point of greater than or equal to (≥) 130°C; and

(C) ≥ 0.5% peroxide;

with the proviso that the ethylene polymer either comprises a continuous matrix within which the propylene polymer is dispersed or is co-continuous with the propylene polymer wherein the composition has a gel content of greater than or equal to (≥) 60% after crosslinking.

DETAILED DESCRIPTION

*Definitions*

Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, temperature, is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the relative amounts of the individual components in the composition.

"Comprising", "including", "having" and like terms mean that the composition, process, etc. is not limited to the components, steps, etc. disclosed, but rather can include other, undisclosed components, steps, etc. In contrast, the term "consisting essentially of' excludes from the scope of any composition, process, etc. any other component, step etc. excepting those that are not essential to the performance, operability or the like of the composition, process, etc. The term "consisting of" excludes from a composition, process, etc., any component, step, etc. not specifically disclosed. The term "or", unless stated otherwise, refers to the disclosed members individually as well as in any combination.

"Cable," "power cable," and like terms means at least one wire or optical fiber within a protective jacket or sheath. Typically, a cable is two or more wires or optical fibers bound together, typically in a common protective jacket or sheath. The individual wires or fibers inside the jacket may be bare, covered or insulated. Combination cables may contain both electrical wires and optical fibers. The cable, etc. can be designed for low, medium and high voltage applications. Typical cable designs are illustrated in U.S. Pat. No. 5,246,783, 6,496,629 and 6,714,707.

"Polymer" means a polymeric compound prepared by polymerizing monomers, whether of the same or a different type. The generic term polymer thus embraces the term homopolymer, usually employed to refer to polymers prepared from only one type of monomer, and the terms "interpolymer" and "copolymer".

"Interpolymer", "copolymer" and like terms means a polymer prepared by the polymerization of at least two different types of monomers. These generic terms include copolymers, usually employed to refer to polymers prepared from two different types of monomers, and polymers prepared from more than two different types of monomers, e.g., terpolymers, tetrapolymers, etc.

"Blend," "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

*Ethylene Polymer*

The ethylene polymers useful in the compositions, insulation shield layers, and cables of this invention have a crystallinity of less than 40 percent, preferably less than 35 percent and more preferably less than 30 percent. The percent crystallinity is determined by dividing the heat of fusion as determined by differential scanning calorimetry (DSC) of a polymer by the total heat of fusion for a 100% crystalline sample of that class of polymer. In the case of ethylene polymers, the total heat of fusion for high-density homopolymer polyethylene (100% crystalline) is 292 joule/gram (J/g). Heat of fusion is determined in accordance with ASTM D3418.

The ethylene polymers include those having an ethylene monomeric content of 30 percent to 97 percent. The remaining monomeric content may be derived from one or more monomers copolymerizable with ethylene. The ethylene polymers include (but are not limited to) ethylene/vinylacetate copolymer, ethylene/butylacrylate copolymer, ethylene/ethylacrylate copolymer, ethylene/$\alpha$-olefin copolymer, and ethylene copolymers made with constrained geometry or metallocene catalyst technology. Excellent teachings directed to ethylene copolymers or interpolymers made with constrained geometry catalyst technology are reported in USP 5,340,840.

The ethylene polymers include ethylene/$\alpha$-olefin interpolymers having an $\alpha$-olefin content typically of at least 5, more typically of at least 10 and even more typically of at least 15, weight percent (wt%) based on the weight of the interpolymer. These interpolymers typically have an $\alpha$-olefin content of less than 50, typically less than 45, more typically less than 40 and even more typically less than 35, wt% based on the weight of the interpolymer. The $\alpha$-olefin content is measured by $^{13}$C nuclear magnetic resonance (NMR) spectroscopy using the procedure described in Randall (*Rev. Macromal. Chem. Phys., C29 (2 & 3)*). Generally, the greater the $\alpha$-olefin content of the interpolymer, the lower the density and the more amorphous the interpolymer, and this translates into desirable physical and chemical properties for the protective insulation layer.

The $\alpha$-olefin is preferably a $C_{3-20}$ linear, branched or cyclic alpha-olefin. Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins also can contain a cyclic, structure such as cyclohexane or cyclopentane, resulting in an $\alpha$-olefin such as 3-cyclohexyl-1-propene (allyl cyclohexane) and vinyl cyclohexane. Although not $\alpha$-olefins in the classical sense of the term, for purposes of this invention certain cyclic olefins, such as norbornene and related olefins, particularly 5-ethylidene-2-norbornene, are $\alpha$-olefins and can be used in place of some or all of the $\alpha$-olefins described above. Similarly, styrene and its related olefins (for example, $\alpha$-methylstyrene, etc.) are $\alpha$-olefins for purposes of this invention. Illustrative ethylene copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, ethylene/propylene/diene monomer (EPDM) and ethylene/butene/styrene. The interpolymers can be random or blocky.

The ethylene polymers used in the practice of this invention can be used alone or in combination with one or more other ethylene polymers, e.g., a blend of two or more ethylene copolymers that differ from one another by monomer composition and content, catalytic method of preparation, etc. If the ethylene polymer is a blend of two or more ethylene polymers, then the blend can be prepared by any in-reactor or post-reactor process.

Preferred ethylene polymers for use in this invention are those made with a single site catalyst, such as a metallocene catalyst or constrained geometry catalyst.

Typically the ethylene polymer has an upper melting point of less than 130°C, preferably less than 120°C, more preferably less than 110°C, even more preferably less than 100°C and still more preferably less than 90°C, and a density of less than 0.95 g/cc, preferably less than 0.94 g/cc, more preferably less than 0.93 g/cc, even more preferably less than 0.92 g/cc and even more preferably less than 0.91 g/cc as measured by ASTM D-792. The ethylene polymer typically has a density greater than 0.85 g/cc, and more preferably greater than 0.86 g/cc. If the ethylene polymer has only one melting point, as determined by differential scanning calorimetry (DSC), that itself is the upper melting point. If the ethylene polymer has more than one melting point, the upper value is the highest melting point detected by DSC.

The ethylene polymer useful in the practice of this invention has a glass transition temperature (Tg) of less than -20°C, preferably less than -25°C, more preferably less than -30°C and even more preferably less than -35°C as measured by differential scanning calorimetry (DSC) using the procedure of ASTM D-3418-03. Moreover, typically the ethylene polymers used in the practice of this invention also have a melt index (MI) of less than 100 g/10 minutes, preferably less than 75 g/10 min, more preferably less than 50 g/10 min and even more preferably less than 35 g/10 min as measured by the procedure of ASTM D-1238 (190°C/2.16 kg). The typical minimum MI is 0.1 g/10 min, and more typically it is 0.5 g/10 min.

Examples of ethylene polymers that can be used in the practice of this invention include very low density polyethylene (VLDPE) (e.g., FLEXOMER™ ethylene/1-hexene polyethylene made by The Dow Chemical Company), homogeneously branched, linear ethylene/α-olefin copolymers (e.g. TAFMER™ by Mitsui Petrochemicals Company Limited and EXACT™ by Exxon Chemical Company), and homogeneously branched, substantially linear ethylene/.alpha.-olefin polymers (e.g., AFFINITY™ and ENGAGE™ polyethylene available from The Dow Chemical Company). The more preferred ethylene polymers are the homogeneously branched linear and substantially linear ethylene copolymers. The substantially linear ethylene copolymers are especially preferred, and are more fully described in USP 5,272,236, 5,278,272 and 5,986,028.

*Propylene Polymer*

The propylene polymer used in the practice of this invention can be a homopolymer or one or more copolymers of units derived from propylene and up to 30 and preferably up to 20, mole percent ethylene and/or one or more other α-olefin having up to 20, preferably up to 12 and more preferably up to 8, carbon atoms. If a copolymer, it is typically random, block or graft. The propylene polymer may be a Ziegler-Natta catalyzed polymer, a metallocene-catalyzed polymer, or a constrained geometry catalyst catalyzed polymer, and may be made using gas phase, solution, or slurry polymer manufacturing processes. The propylene polymer may be a homopolymer or a blend of a homopolymer and one or more copolymers, or a blend of two or more copolymers. "Propylene homopolymer" and similar terms mean a polymer consisting solely or essentially all of units derived from propylene.

The molecular weight of the propylene polymer is conveniently indicated using a melt flow measurement according to ASTM D-1238 (Condition 230°C/2.16 kg (formerly known as "Condition (L)"). Melt flow rate is inversely proportional to the molecular weight of the polymer. Thus, the higher the molecular weight, the lower the melt flow rate, although the relationship is not linear. The melt flow rate for the polypropylene useful in the practice of this invention is generally between about 0.1 and 100, and more preferably between about 0.5 and 40. Examples of the polypropylene polymers useful in the practice of this invention are more fully described in Modern Plastics Encyclopedia/89, mid October 1988 Issue, Volume 65, Number 11, pp. 86-92.

The propylene polymer can be primarily isotactic or primarily syndiotactic. As here used with respect to the polypropylene homopolymer, the term "primarily" means greater than 60 percent. For example, a primarily syndiotactic polypropylene homopolymer can have greater than 60 percent racemo diads. In a preferred embodiment, the polypropylene homopolymer is primarily isotactic. In various embodiments, the polypropylene homopolymer can have at least 70, at least 80, at least 90, or at least 95 percent isotactic pentads as determined by $^{13}$C-nuclear magnetic resonance ("NMR") analysis.

In one embodiment the propylene polymer is a non-nucleated homo- or copolymer.

If the propylene polymer is a copolymer, e.g., a propylene-α-olefin interpolymer, then it is polymer of a propylene monomer copolymerized with one or more types of α-olefin comonomer. The α-olefin comonomer can be ethylene, a $C_{4-20}$ (i.e., a monomer having 4 to 20 carbon atoms) linear, branched or cyclic α-olefin, or mixtures of two or more thereof. Non-limiting examples of suitable $C_{4-20}$ α-olefins include 1-butene, 4-methyl-1-pentene, 1-hexene, 1-octene, 1-decene, 1-dodecene, 1-tetradecene, 1-hexadecene, and 1-octadecene. The α-olefins can also contain a cyclic structure such as cyclohexane or cyclopentane, resulting in a α-olefin such as 3-cyclohexyl-1-propene (allyl cyclohexane) and vinyl cyclohexane. Illustrative propylene-α-olefin interpolymers include propylene/ethylene, propylene/butene, propylene/1-hexene, propylene/1-octene, ethylene/propylene/1-octene, ethylene/propylene/butene, and ethylene/propylene/diene monomer ("EPDM"). The propylene-α-olefin interpolymers can be random interpolymers. In one embodiment the α-olefin component of the propylene-α-olefin interpolymer is ethylene.

The polymerized α-olefin component of the propylene-α-olefin interpolymer can constitute from greater than 0 to up to 15 mole percent ("mol%"), or from 5 to 15 mol%, of the total propylene-α-olefin interpolymer. Polymerized propylene can constitute all or substantially all of the remainder of the propylene-α-olefin interpolymer.

In one embodiment the polypropylene homopolymer, impact copolymer or random copolymer can have a melt flow rate from 0.5 to 10 g/10 minutes ("min"), or from 1 to 5 g/10 min, as determined according to ASTM D-1238 (230°C/2.16 kg). Also, the polypropylene homopolymer, impact copolymer or random copolymer can have a polydispersity index ("PDI") (i.e., weight average molecular weight/number average molecular weight; "Mw/Mn;" or molecular weight distribution ("MWD")) from 2 to 12, or from 3 to 8, as determined by gel permeation chromatography.

Exemplary commercially available polypropylene homopolymers include BRASKEM PP H358-02, available from Braskem S.A. (São Paulo, Brazil); MOPLEN HP1073, available from LyondellBasell (Rotterdam, Netherlands); or PP525 P available from Sabic (Riyadh, Saudi Arabia).

In one embodiment the propylene- α-olefin interpolymer has a density from 0.855 to 0.90 g/cm$^3$, or from 0.86 to 0.88 g/cm$^3$, as determined according to ASTM D-792. The propylene- α-olefin interpolymer can have a melt flow rate from 0.5 to 10 g/10 min, or from 1 to 5 g/10 min, as determined according to ASTM D-1238 (230°C/2.16 kg). Also, the propylene-α-olefin interpolymer/ can have a PDI in the range of from 2 to 6, or in the range of from 2 to 4, as determined by gel permeation chromatography.

Exemplary commercially available propylene-α-olefin interpolymers include VERSIFY™ 2200 and 2400, each available from The Dow Chemical Company (Midland, Michigan, USA); VISTAMAXX™ 3020 FL from ExxonMobil Chemical (Irving, Texas, USA); and TAFMER™ XM from Mitsui Chemicals (Tokyo, Japan).

Regardless if the propylene polymer is a homopolymer or interpolymer, it has an upper melting point of at least 130°C, preferably at least 135°C and more preferably at least 140°C as determined by differential scanning calorimetry (DSC). If the propylene polymer has only one melting point, that itself is the upper melting point. If the propylene polymer has more than one melting point, the upper value is the highest melting point detected by DSC. In one embodiment the propylene polymer is an impact copolymer polypropylene. As described in USP 6,492,465, typical propylene impact copolymers contain two phases or components, i.e., a homopolymer component and a copolymer component. These two components are usually produced in a sequential polymerization process in which the homopolymer is produced in a first reactor and then is transferred to a second reactor in which the copolymer is produced and incorporated into the matrix of the homopolymer. The copolymer has rubbery characteristics, and it provides desirable impact resistance. The homopolymer provides the overall stiffness.

*Peroxide*

Any peroxide that will promote the crosslinking of the composition of this invention can be used in the practice of this invention. Exemplary peroxides include dicumyl peroxide; bis(alpha-t-butyl peroxyisopropyl)benzene; isopropylcumyl t-butyl peroxide; t-butylcumylperoxide; di-t-butyl peroxide; 2,5-bis(t-butylperoxy)2,5-dimethylhexane; 2,5-bis(t-butylperoxy)2,5-dimethylhexane-3; 1,1-bis(t-butylperoxy)3,3,5-trimethylcyclohexane; isopropylcumyl cumylperoxide; di(isopropylcumyl) peroxide; or mixtures thereof. Peroxide curing agents are used in amounts of at least 0.5 wt% based on the weight of the composition. In various embodiments the peroxide curing agent is used in an amount of 0.5-10, or 0.7-5 or 1-3 wt% based on the weight of the composition. The peroxides can be used alone or in combination with various other known curing co-agents, boosters, and retarders, such as triallyl isocyanurate; ethoxylated bisphenol A dimethacrylate; $\alpha$-methyl styrene dimer; and other co-agents described in USP 5,346,961 and 4,018,852.

*Other Crosslinking Agents or Technologies*

As an alternative, or in addition, to the use of peroxides for the crosslinking of the compositions of this invention, other approaches for crosslinking of polymers may be used to effect the desired degree of crosslinking. Such approaches and technologies are well known to those skilled in the art and include (but are not limited to) radiation crosslinking, moisture crosslinking, bisulfonyl azide crosslinking, etc. In some cases, it would be necessary for the ethylene and/or propylene polymers used in the practice of this invention to be functionalized appropriately to enable crosslinking (for example, with alkoxy silanes in the case of moisture crosslinking)

*Compatibilizer*

In one embodiment the composition comprises a compatibilizer. In one embodiment, a preferred embodiment, the composition does not comprise a compatibilizer. The compatibilizer can be a polymer that is miscible or compatible with the ethylene and propylene polymers used to make the compositions of this invention. The definition of polymer blend compatibilization and the various approaches used is given in Utracki, L. A., The Canadian Journal of Chemical Engineering, Volume 80, December 2002, pages 1008 to 1016. If present, then the amount of compatibilizer in the composition, based on the weight of the composition, is typically less than 10 wt%, more typically less than 5 wt% and even more typically less than 3 wt%. Compatibilizer-free compositions comprise no more than trace amounts, (e.g., less than 0.1, preferably less than 0.01 wt% and even more preferably less than 0.001 wt%) of compatibilizer, and the typically less than that detectable using standard analytical techniques.

*Additives*

The compositions of the present invention can also comprise conventional additives. These optional components include, but are not limited to, antioxidants, processing aids, fillers, coupling agents, ultraviolet absorbers or stabilizers, antistatic agents, nucleating agents, slip agents, plasticizers, lubricants, viscosity control agents, tackifiers, anti-blocking agents, surfactants, extender oils, acid scavengers, tree-retardants (e.g., polyethylene glycol, polar polyolefin copolymers, etc.), scorch retardants, and metal deactivators. Fillers include calcined clay and organoclay. Additives can be used in amounts ranging from less than 0.01 to more than 10 wt % based on the weight of the composition. Typically, the total amount of additives in the composition is between 0.1 and 10 wt% based on the weight of the composition.

*Composition*

In one embodiment the composition of this invention comprises in weight percent based upon the weight of the composition:

(A) 60 to 95%, preferably 70 to 93% and more preferably 80 to 90%, ethylene polymer of crystallinity of less than 40 percent;
(B) 4 to less than 40%, preferably 7 to less than 30% and more preferably 10 to less than 20% propylene polymer with an upper melting point of at least 130°C, preferably an isotactic polypropylene;
(C) At least 0.5%, preferably at least 0.7% and more preferably at least 1%, peroxide, preferably dicumyl peroxide;
(D) Optionally a compatibilizer and if present, in an amount of 0.1 to less than 10%, preferably 0.5 to less than 5% and more preferably in an amount of 1 to less than 3%; and
(D) Optionally one or more additives and if present, the total amount of additives present in an amount of 0.01 to more than 10%, preferably 0.1 to 10%.

The compositions of this invention, and particularly the propylene and/or ethylene polymer components, are preferably free or contain inconsequential amounts of watersoluble salts that can have deleterious effects on wet electrical properties. Examples include the various sodium salts, e.g., sodium benzoates that are often used as nucleating agents for polypropylene.

The components of the composition can be blended in any manner and using any equipment. Typically, the ethylene and propylene polymers are melted blended with one another in conventional mixing equipment, e.g., a BRABENDER batch mixer or extruder, to form a relatively homogeneous blend comprising a continuous or co-continuous ethylene polymer phase or matrix with a continuous or discontinuous propylene polymer phase. The mixing or blending may be done at, below or above the upper melting temperature (point) of the propylene polymer. The peroxide and optional compatibilizer and additives can be added in any manner, including soaking and mixing. In one embodiment, the compatibilizer and additives are blended with one another and then added to the blended ethylene and propylene polymers. In one embodiment the optional components are added individually. In one embodiment one or more of the optional components are mixed with one or both of the ethylene and propylene polymers before the polymers are melt-blended with one another. In one embodiment one or more of the optional components are added as a masterbatch either to the blended polymers or to one or both of the polymers prior to melt blending. Typically, the peroxide is the last component to be added to the blended polymers although here too, it can be first soaked or mixed with one or both of the polymers prior to the melt blending of the polymers. In an embodiment, all the ingredients (including peroxide) are melt-blended in one step. In another embodiment, all the ingredients (including peroxide) are melt-blended in one step as part of the cable extrusion process, without a need to first prepare a compound prior to use during cable extrusion.

The composition has the following properties without the optional compatibilizer and additives, and without the peroxide, i.e., before crosslinking: a maximum extensional viscosity of greater than 2E+05 poise, preferably greater than 5E+05 poise and most preferably greater than 9E+05 poise; and a maximum Hencky strain of greater than 1, preferably greater than 1.5 and most preferably greater than 2 at the same conditions. Extensional viscosity and Hencky Strain are measured using an ARES FCU Rheometer with Extensional Viscosity Fixture Geometry and TA Orchestrator software. The tests are conducted at a rate of 1/sec at 135°C to simulate extrusion conditions.

The composition has the following crosslinking kinetics with the peroxide, with or without the optional compatibilizer and additives:

(1) A measure of scorch-resistance at extrusion conditions: ts1 (time for 1 lb-in increase in torque) at 140°C > 2 minutes, preferably > 3 min, most preferably > 4 min;
(2) A measure of crosslinkability in the continuous vulcanization step: MH (maximum torque at 182°C) - ML (minimum torque at 182°C) > 1 lb-in, preferably > 1.5 lb-in, most, preferably > 2.0 lb-in;

The composition has the following properties after crosslinking, with or without the optional compatibilizer and additives:

(1) Gel content > 60%;
(2) Flexural Modulus, 2% secant < 16,000 psi (110 MPa), 12,000 psi (83 MPa), most preferably < 8000 psi (55 MPa);
(3) Hot creep (150°C) < 175%, preferably < 125%, most preferably < 100%;
(4) Dissipation factor (DF) at 130°C, 60 Hz < 5%, preferably < 2%, most preferably < 1%;
(5) AC breakdown strength (unaged and aged) > 28 kV/mm, preferably > 29 kV/mm, most preferably > 30 kV/mm; and
(6) Density < 1.5 g/cm$^3$, preferably < 1.4 g/cm$^3$, most preferably < 1.3 g/cm$^3$.

*Insulation Sheath*

The compositions of this invention are well suited for conductor coating applications, and conductor insulating layers in particular. In one embodiment the invention is an insulation sheath for a conductor. In one embodiment the invention is a conductor comprising an insulation sheath made from the composition of the invention. A "conductor" is an element of elongated shape (wire, cable, fiber) for transferring energy at any voltage (DC, AC, or transient). The conductor is typically at least one metal wire or at least one metal cable (such as aluminum or copper) but may be optical fiber. The conductor may be a single cable or a plurality of cables bound together (i.e., a cable core, or a core).

The process for producing a coated conductor includes heating a composition of this invention to at least the melting temperature of the ethylene polymer and then extruding the polymer melt blend onto the conductor. The term "onto" includes direct contact or indirect contact between the polymer melt blend and the conductor. The polymer melt blend is in an extrudable state.

The coating is located on the conductor. The coating may be one or more inner layers such as an insulating layer. The coating may wholly or partially cover or otherwise surround or encase the conductor. The coating may be the sole component surrounding the conductor. Alternatively, the coating may be one layer of a multilayer jacket or sheath encasing the metal conductor.

The coating is crosslinked. In one embodiment crosslinking of the composition begins in the extruder but only to a minimal extent. In one embodiment crosslinking is delayed until the composition is extruded upon the conductor. Crosslinking of the composition can be initiated and/or accelerated through the application of heat or radiation. Once on the conductor, the composition is crosslinked to at least a 60%, gel content level as measured by the procedure described in the examples.

The coated conductor prepared by the process described above is flexible Non-limiting examples of suitable coated conductors include flexible wiring such as wiring for consumer electronics, a power cable, a power charger wire for cell phones and/or computers, computer data cords, power cords, appliance wiring material, and consumer electronic accessory cords.

In one embodiment the invention is a wire or cable comprising an insulation sheath made from the composition of this invention. In one embodiment the composition is melt-shaped into an article other than a coating on a conductor, e.g., an electrical connector or a component of an electrical connector.

*Other Fabricated Articles*

The compositions of this invention may also be used to make other fabricated articles, by melt mixing and crosslinking processes known to those skilled in the art, including (but not limited to) extrusion, injection molding, continuous vulcanization, etc.

EXAMPLES

*Test Methods*

Flexural Modulus (3 point bend) - Flexural Modulus (2% secant modulus) is tested according to ASTM D790 with an INSTRON model 4201 tensile testing machine on crosslinked molded specimens with a nominal 125 mil (3.2 mm) thickness. The 3-point bend flexural modulus is conducted on a bar of rectangular cross section rested on two supports and loaded by means of a loading nose midway between the supports at 0.1 inches/minute (2.5 mm/min).

Hot creep - Hot creep is measured to determine the degree of cure (crosslinking) and hot set is used to measure the sample relaxation after hot creep elongation. Testing is based on the ICEA-T-28-562-2003 method for power cable insulation materials. Hot creep testing is conducted on 50 mil (1.3 mm) thick samples in an oven with a glass door at 150°C or 200°C with a force of 0.2 MPa stress applied to the bottom of the specimens. Three test specimens for each sample are cut using ASTM D 412 type D tensile bars. The samples are elongated for 15 minutes where the percentage increases in length are measured and the average values of the three specimens are reported as "hot creep". The hot set values are obtained for the same samples undergoing hot-creep testing, after removing the load for 5 minutes under heat and cooling them at room temperature for 10 minutes. A sample is considered to have "failed" if it breaks during the test or yields hot creep $\geq$ 175%.

Moving Die Rheometer (MDR) analyses are performed on the compounds using Alpha Technologies Rheometer MDR model 2000 unit. Testing is based on ASTM procedure D 5289, "Standard Test Method for Rubber - Property Vulcanization Using Rotorless Cure Meters". The MDR analyses are performed using 6 grams of material. Samples are tested at 182°C for 12 minutes or 20 minutes or at 140°C for 120 minutes or 240 minutes at 0.5 degrees arc oscillation for both temperature conditions. Samples are tested on material directly from the BRABENDER mixing bowl.

Gel content (insoluble fraction) produced in ethylene plastics by crosslinking can be determined by extracting with the solvent decahydronaphthalene (decalin) according to ASTM D2765. It is applicable to cross-linked ethylene plastics of all densities, including those containing fillers, and all provide corrections for the inert fillers present in some of those compounds. The test is conducted on specimens that came out of the MDR experiments at 182°C. A WILEY mill is used (20 mesh screen) to prepare powdered samples, at least one gram of material for each sample. Fabrication of the sample pouches is crafted carefully to avoid leaks of the powdered samples from the pouch. In any technique used, losses of powder to leaks around the folds or through staple holes are to be avoided. The width of the finished pouch is no more than three quarters of an inch, and the length is no more than two inches. 120 mesh screens are used for pouches.

The sample pouch is weighed on an analytical balance. 0.3 grams (+/- .02 g) of powdered samples is placed into the pouch. Since it is necessary to pack the sample into the pouch, care is given not to force open the folds in the pouch. The pouches are sealed and samples are then weighed. Samples are then placed into one liter of boiling decahydronaphthalene (decalin), with 10 grams of 2,2'-methylene-bis (4-methyl-6-tertiary butyl phenol) for 6 hours using flasks in a heated mantle. After the (decalin) has boiled for six hours, the voltage regulator is turned off leaving the cooling water running until (decalin) has cooled below its flash point (this typically takes at least a half hour). When the (decalin) has cooled, the cooling water is turned off and the pouches removed from the flasks. The pouches are allowed to cool under a hood, to remove as much solvent as possible. Then the pouches are placed in a vacuum oven set at 150°C for four hours, maintaining a vacuum of 25 inches of mercury. The pouches are then taken out of the oven and allowed to cool to room temperature. Weights are recorded on an analytical balance. The calculation for gel extraction is shown below where W1 = weight of empty pouch, W2 = weight of sample and pouch, W3 = weight of sample, pouch and staple, and W4 = weight after extraction.

$$\% \text{ extracted} = \left(\frac{W_3 - W_4}{W_2 - W_1}\right) \times 100$$

$$\text{Gel Content} = 100 - \% \text{ extracted}$$

Dissipation Factor (DF) and dielectric constant (DC) testing is conducted on cured 50 mil (1.3 mm) plaques. The plaques are degassed in a vacuum oven at 60°C for five days. DF testing is carried out according to ASTM D150 at 60 Hz on a GUILDLINE High Voltage Capacitance Bridge unit, Model 9920A, with a TETTEX specimen holder and a TETTEX AG Instruments Temperature Control Unit. Samples are tested at 60 Hz and 2 kV applied stress at temperatures of 25°C, 40°C, 90°C, and 130°C.

AC Breakdown Strength (ACBD), also known as AC Dielectric Strength, is tested with nominal 35 mil (0.9 mm) thick cured plaques on a BRINKMAN AC Dielectric Strength Tester using EXXON Univolt N61 transformer oil. Aged samples were aged in a glass U-tube filled with 0.01 M sodium chloride solution for twenty one days at 6 kV.

Density is measured according to ASTM D-792.

Shore D and Shore A hardness are determined in accordance with ASTM D 2240, on specimens of 250 mil (6.4 mm) thickness, and the average of 4-5 measurements was recorded.

Melting point (also known as crystalline melting point), heat of fusion and crystallinity are determined by differential scanning calorimetry (DSC) in accordance with ASTM D3418.

EXAMPLES 1-3 AND COMPARATIVE EXAMPLES 1-5

*Sample Preparation*

The compositions are reported in Table 1. Samples are first compounded without peroxide in a 250 cm$^3$ BRABENDER batch mixer with cam rotors at 190°C and 35 revolutions per minute (rpm) for 5 minutes (for formulations containing polypropylene) or 140°C and 35 rpm for 5 minutes (for all other compositions). The melt blended samples were removed from the mixing bowl and transferred to a roll mill where peroxide was added at 115°C and mixed for 5 minutes.

Samples are removed from the mixer and pressed to various thicknesses for testing. For rheological (extensional viscosity and Hencky Strain) measurements, melt-blended samples are taken before peroxide addition or after peroxide addition, and plaques are compression molded at 500 psi pressure at 125°C for 3 min, followed by 2500 psi pressure for 3 minutes at this temperature. The press is cooled to 30°C at 2500 psi pressure. Once at 30°C, the press is opened and the plaque is removed.

For electrical and mechanical measurements, peroxide-containing compositions are compression molded at 500 psi (3.5_MPa) pressure and 125°C for 3 min, followed by 2500 psi (17_MPa) pressure for 15 minutes at 180°C to complete crosslinking. The press is then cooled to 30°C at 2500 psi pressure. Once at 30°C, the press is opened and the plaque is removed.

The properties of the compositions are given in the Table 1. Unlike the comparative examples, Examples 1-3 exhibited the desired combination of properties for the manufacture and use of medium-voltage power cable insulation (coated conductors), i.e., low density (for light weight and ease of installation); acceptably high extensional viscosity and Hencky strain (required for sag-resistance during extrusion); acceptably high ts1 (for scorch-resistance during extrusion); acceptably high MH-ML and gel content (for crosslinking after extrusion); sufficiently low flexural modulus (for ease of installation); sufficiently low creep at elevated temperature (to maintain dimensional integrity during use); adequate dissipation factor (to minimize electrical losses during use); and sufficiently high AC breakdown strength (unaged and aged). Note that, although Example 3 did not pass the hot creep test conducted at 200°C, it did pass this test satisfactorily at a temperature of 150°C.

Table 1

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| **Compositions and Properties of Example 1-3 and Comparative Examples 1-5** | | | | | | | | |
| **Composition (wt%)** | | | | | | | | |
| Component A: ENGAGE™ 7447 EL | 83.4 | 93.2 | 60.2 | 98.2 | | 97.2 | | |
| Component B: PP (H314-02Z) | 14.8 | | | | | | | |
| Component B: PP (Braskem FF018F) | | 4.0 | 37.0 | | | | | |
| Cyanox 2212 | 0.34 | 0.34 | 0.34 | 0.34 | 0.34 | 0.34 | 0.34 | |
| Agerite MA | | | | | | | | 0.34 |
| Component C: Dicumyl Peroxide (Perkadox™ BC-FF) | 1.5 | 2.5 | 2.5 | 1.5 | 1.5 | 2.5 | 2.5 | 2.5 |
| Nordel™ IP 3722 EPDM | | | | | 65.7 | | 97.2 | 64.7 |
| Burgess KE Translink 37 clay | | | | | 32.4 | | | 32.4 |
| Total | 100 | 100 | 100 | 100 | 100 | 100 | 100 | 100 |
| | | | | | | | | |
| **Density (g/cm³)** | 0.9 | 0.9 | 0.9 | 0.9 | 1.5 | 0.9 | 0.9 | 1.4 |
| | | | | | | | | |
| **Melt Extensional Properties Without peroxide** | | | | | | | | |
| Maximum extensional viscosity at 135°C, 1/s (poise) | 2.3E+06 | 2.3E+05 | Not Measurable | 1.2E+05 | 2.0E+06 | 1.7E+05 | 1.5E+06 | 1.9E+06 |
| Maximum Hencky strain at 135°C | 2.1 | 2.1 | Not Measurable | > 4.1 | 2.5 | > 4.1 | 3.8 | 2.2 |

EP 3 022 259 B1

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| **Melt Extensional Properties With peroxide** | | | | | | | | |
| Maximum extensional viscosity at 135°C, 1/s (poise) | 5.5E+06 | Not Measured | Not Measured | 4.1E+05 | Not Measured | Not Measured | Not Measured | Not Measured |
| Maximum Hencky strain at 135°C | 1.7 | Not Measured | Not Measured | > 4.1 | Not Measured | Not Measured | Not Measured | Not Measured |
| | | | | | | | | |
| **Crosslinking Kinetics With peroxide** | | | | | | | | |
| MDR: ts1 at 140°C (minutes) | 21.7 | 15.2 | 2.7 | 31.3 | > 90 | 18.1 | 12.6 | 5.6 |
| MDR: MH at 182°C (lb in) | 2.79 | 5.79 | 1.28 | 3.85 | 0.90 | 6.18 | 11.7 | 23.0 |
| MDR: MH-ML at 182°C (lb in) | 2.69 | 5.72 | 1.14 | 3.77 | 0.11 | 6.12 | 11.24 | 22.05 |
| | | | | | | | | |
| **Properties After Crosslinking** | | | | | | | | |
| Gel content (wt%) | 71 | 90 | 65 | 83 | Not Measured | 90 | 94 | 98 |
| Flex Modulus, 2% secant (psi) | 2213 | 2408 | 7469 | 1804 | 3479 | 2393 | 3060 | 3524 |
| Hardness (Shore A) | 89 | 65 | 90 | 64 | 80 | 63 | 74 | 81 |
| Hardness (Shore D) | Not Measured | 15 | 29 | Not Measured | Not Measured | 14 | 21 | 24 |
| | Example 1 | Example 2 | Example 3 | Comparative Example 1 | Comparative Example 2 | Comparative Example 3 | Comparative Example 4 | Comparative Example 5 |
| Hot creep (150°C, 20N), % | 37 | 11 | 8 | 47 | Failed (0 out of 3 passed) | 11 | 2 | 4 |

EP 3 022 259 B1

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| Hot creep (200°C, 20N), %, | Failed (0 out of 3 passed) | 24 | Failed (0 out of 3 passed) | Failed (0 out of 3 passed) | Failed (0 out of 3 passed) | 23 | 5 | 4 |
| DF at 130°C, 60 Hz (%) | 0.29 | 0.07 | 0.11 | 0.86 | 0.86 | 0.11 | 3.25 | 0.72 |
| DC at 130°C, 60 Hz (%) | 1.84 | 1.94 | 2.00 | 1.91 | 2.22 | 1.96 | 2.12 | 2.25 |
| AC Breakdown Strength - unaged (kV/mm) | 34.2 | 35.1 | 37.5 | 31.3 | 33.4 | 33.7 | 33.3 | 31.4 |
| AC Breakdown Strength- aged (kV/mm) | 32.6 | 31.7 | 36.5 | 27.6 | 29.0 | 31.2 | 31.8 | 29.9 |

ENGAGE™ 7447 EL Polyolefin Elastomer is an ethylene butene copolymer with a density of 0.865 g/cc (ASTM D792), crystallinity of 8 percent (determined from DSC measurements), a melt index of 5.0 g/10 min (190°C, 2.16 kg, ASTM D1238) and available from The Dow Chemical Company PP (H314-02Z) is a polypropylene homopolymer of 2.0 dg/min melt flow rate (230°C, 2.16 kg, ASTM D1238) and melting point of 162°C (measured by DSC) formerly manufactured by The Dow Chemical Company.

PP (Braskem FF018F) is a polypropylene homopolymer of 1.8 dg/min melt flow rate (230°C, 2.16 kg, ASTM D1238) and melting point ranging from 160°C to 170°C (measured by DSC) available from Braskem.

Perkadox™ BC-FF is a dicumyl peroxide available from AkzoNobel.

Agerite MA is a Polymerized 1,2-dihydro-2,2,4-trimethylquinoline available from R.T. Vanderbuilt.

CYANOX 2212 is a mixed lauryl-stearylthiodipropionate antioxidant available from Cytex.

NORDEL™ IP 3722 is a hydrocarbon rubber in the family of ethylene propylene diene monomer (EPDM) polymers, that is semi-crystalline with very low diene-level and Mooney viscosity of 18 at 125°C, which is available from The Dow Chemical Company.

BURGESS KE Translink 37 clay is a calcined and surface-treated aluminosilicate which is available from BASF.

EXAMPLES 4-5 AND COMPARATIVE EXAMPLES 6-9

*Sample Preparation*

The compositions used in these examples are reported in Table 2. The blends of Components A and B, used in Comparative Examples 7-9 and Examples 4-5, are made as follows: a dry mix of components A & B (weight ratio 1:1) and 500 ppm of IRGANOX™ 1010 is compounded in an APV Baker MP19-40 TC twin screw extruder. The extruder conditions are as reported in Table 3.

The strands exiting the die are cooled in a water bath and cut into pellets using a pelletizer.

The compositions of Examples 4-5 and Comparative Examples 6-9 are made as follows. 196.6 grams of polymer pellets (either LDPE or the blend of Components A and B) are heated in a glass jar at 60°C for 2 hours. Perkadox™ BC-FF dicumyl peroxide is preheated separately to 60°C (above its melting point of 40°C). 3.4 grams of preheated peroxide is added to the polymer pellets in the jar using a syringe, and tumble blended for 30 minutes at room temperature (23°C). The jar is placed back in the oven at 60°C overnight. The jar is then removed from the oven and its contents tumble blended again at room temperature (23°C) for 30 minutes.

The compositions are subsequently tested in a moving die rheometer at 140°C for 240 minutes or 182°C for 20 minutes (for evaluation of gel contents), or compression molded at the following conditions to make specimens of different dimensions: 500 psi (3.5_MPa) at 125°C for 3 minutes, followed by 2500 psi (17 MPa) at 180°C for 20 minutes, and cooling to 30°C at this pressure. The thicknesses of the molded specimens were as follows:

Flex modulus: 125 mil
Hot creep and set (150°C or 200°C, 20 N/mm$^2$): 50 mil
DC/DF at 60 Hz (23°C, 40°C, 90°C and 130°C): 50 mil
Shore A and Shore D: 250 mil circular specimen

The properties of the crosslinked compositions are given in Table 2. Examples 4 and 5 exhibit the desired combination of properties as previously noted for the manufacture and use of flexible medium-voltage power cable insulation (coated conductors). These properties include acceptably high gel content (as a measure of degree of crosslinking); acceptably low hardness and flexural modulus (relevant for cable installation); sufficiently low creep at temperatures up to 200°C (to maintain dimensional integrity during use); adequate dissipation factor (to minimize electrical losses during use); and satisfactory dielectric constant (as a measure of resistance to electrical conduction of the material). DC/DF was also measured at temperatures below 130°C, but the values are not shown in Table 2.

Table 2

| Compositions and Properties of Examples 4-5 and Comparative Examples 6-9 | | | | | | |
|---|---|---|---|---|---|---|
| | Example 4 | Example 5 | Comparative Example 6 | Comparative Example 7 | Comparative Example 8 | Comparative Example 9 |
| **Composition (wt%)** | | | | | | |
| Component A: ENGAGE™ 8452 | 68.81 | 58.98 | | 49.15 | 39.32 | 29.49 |
| Component B: Moplen EP2382 PP Impact Copolymer | 29.49 | 39.32 | | 49.15 | 58.98 | 68.81 |
| Component C: Dicumyl Peroxide | 1.7 | 1.7 | 1.7 | 1.7 | 1.7 | 1.7 |
| Low Density Polyethylene | | | 98.3 | | | |
| Total | 100 | 100 | 100 | 100 | 100 | 100 |
| | | | | | | |

(continued)

| Crosslinking Kinetics With peroxide | | | | | | |
|---|---|---|---|---|---|---|
| MDR: ts1 at 140°C (minutes) | 6.7 | 4.8 | 17.6 | 3.1 | 1.3 | 1.1 |
| MDR: MH at 182°C (lb in) | 3.65 | 2.90 | 3.83 | 1.97 | 1.26 | 0.71 |
| MDR: MH-ML at 182°C (lb in) | 3.42 | 2.66 | 3.62 | 1.74 | 1.04 | 0.52 |
| Gel content (wt%) | 87 | 81 | 87 | 65 | 58 | 48 |
| Hardness(Shore D) | 31.0 ± 2.4 | 37.0 ± 2.0 | 45.4 ± 2.4 | 38.6 ± 1.7 | 41.7 ± 1.4 | 45.9 ± 1.4 |
| Hardness(Shore A) | 87.7 ± 0.9 | 90.7 ± 1.5 | 93.2 ± 1.3 | 90.8 ± 0.9 | 93.3 ± 2.0 | 93.0 ± 1.0 |
| Flex Modulus, 2% secant (psi) | 10151 ± 587 | 15320 ± 1493 | 15709 ± 389 | 22011 ± 1841 | 27309 ± 745 | 35942 ± 2280 |
| Hot creep (150°C, 20N/mm$^2$), % | 6.7 ± 0.4 (all 3 passed) | 6.0 ± 1.6 (all 3 passed) | 34.7 ± 0.1 (all 3 passed) | 15.3 ± 14.7 (all 3 passed) | 4.5 ± 0.3 (all 3 passed) | 3.9 ± 1.3 (all 3 passed) |
| Hot creep (200°C, 20N/mm$^2$), % | 38.4 ± 0.6 (all 3 passed) | 47.4 ± 1.2 (all 3 passed) | 43.1 ± 2.5 (all 3 passed) | Failed (only 2 out of 3 passed - 70.2 ± 7.8) | Failed (only 1 out of 3 passed - 71.8) | Failed (0 out of 3 passed) |
| DF at 130°C, 60 Hz (%) | 0.20 | 0.15 | 0.03 | 0.10 | 0.08 | 0.07 |
| DC at 130°C, 60 Hz (%) | 1.92 | 1.95 | 1.82 | 1.95 | 2.01 | 2.05 |

ENGAGE™ 8452 Polyolefin Elastomer is an ethylene octene copolymer with a density of 0.875 g/cc (ASTM D792), crystallinity of 15 percent (determined from DSC measurements), a melt index of 3.0 g/10 min (190°C, 2.16 kg, ASTM D1238) and available from The Dow Chemical Company.
MOPLEN EP2382 is a propylene impact copolymer with a density of 0.900 g/cc (ISO 1183), a melt flow rate of 2.0 g/10 min (ISO 1133), two melting points of 125°C and 165°C respectively (measured by DSC) and is available from LyondellBasell Industries. That is, the upper melting point of MOPLEN EP2382 is 165°C.
Low density polyethylene has a density of 0.922 g/cc (ASTM D792), crystallinity of 45 percent (determined from DSC measurements) and melt index of 2.4 g/10 min (190°C, 2.16 kg, ASTM D1238).
IRGANOX 1010 is pentaerythritol tetrakis(3-(3,5-di-tert-butyl-4-hydroxyphenyl)propionate) antioxidant available from Ciba.

Table 3

| Twin Screw Compounding Conditions | |
|---|---|
| **Barrel Temp** | |
| Zone 1 [°C] | 160 |
| Zone 2 [°C] | 190 |
| Zone 3 [°C] | 200 |
| Zone 4 [°C] | 210 |
| Zone 5 [°C] | 220 |

(continued)

| Twin Screw Compounding Conditions | |
|---|---|
| **Barrel Temp** | |
| Zone 6 [°C] | 230 |
| Zone 7 [°C] | 240 |
| Die [°C] | 250 |
| Melt temp [°C] | 258 |
| Pressure [bar] | 14 |
| RPM | 180 |
| torque [%] | 53 |
| Output [kg/hr] | 2.8 |
| Feeder set | 32 |

## Claims

1. A composition comprising in weight percent based on the weight of the composition:

   (A) 60-95% of an ethylene polymer of crystallinity of less than 40% as measured by ASTM D3418;
   (B) 4 to less than 40% of a propylene polymer with an upper melting point of greater than or equal to (≥) 130°C as measured by ASTM D3418; and
   (C) ≥ 0.5% peroxide;

   with the proviso that the ethylene polymer comprises either a continuous phase within which the propylene polymer is dispersed or is co-continuous with the propylene polymer, wherein the composition has a gel content of greater than or equal to (≥) 60% after crosslinking as measured by extraction with decahydronaphthalene according to ASTM D2765.

2. The composition of Claim 1 in which the ethylene polymer is an ethylene polymer made with a contained geometry or metallocene catalyst.

3. The composition of Claim 2 in which the propylene polymer is an impact copolymer polypropylene.

4. The composition of Claim 2 in which the propylene polymer is an isotactic polypropylene homopolymer.

5. The composition of Claim 1 further comprising a compatibilizer.

6. The composition of Claim 1 free of a compatibilizer.

7. A crosslinked insulation sheath for a cable, the crosslinked insulation sheath made from a composition comprising in weight percent based on the weight of the composition;

   (A) 60-95% of an ethylene polymer of crystallinity of less than 40% as measured by ASTM D3418;
   (B) 4 to less than 40% of a propylene polymer with an upper melting point of greater than or equal to (≥) 130°C as measured by ASTM D3418; and
   (C) ≥ 0.5% peroxide;

   with the proviso that the ethylene polymer either comprises a continuous matrix within which the propylene polymer is dispersed or is co-continuous with the propylene polymer, wherein the composition has a gel content of greater than or equal to (≥) 60% after crosslinking, as measured by extraction with decahydronaphthalene according to ASTM D2765.

8. A cable comprising an insulation sheath of Claim 7.

9. The composition of claim 1 in which the ethylene polymer is an ethylene/$\alpha$-olefin interpolymer comprising ethylene and from 5 wt% to less than 50 wt% $\alpha$-olefin, based on the weight of the interpolymer.

10. The composition of claim 1 in which the composition comprises from 0.5 wt% to 10 wt% of the peroxide.

11. The crosslinked composition of claim 1 in which the composition has the following properties:

(1) Gel content > 60% as measured by extraction with decahydronaphthalene according to ASTM D2765;
(2) Flexural modulus, 2% secant < 16,000 psi (110 MPa) measured according to ASTM D790;
(3) Hot creep (150°C) < 175% measured according to ICEA-T-28-562-2003;
(4) Dissipation factor (DF) at 130°C, 60 Hz < 5% measured according to ASTM D150;
(5) AC Breakdown strength (unaged and aged) > 28 kV/mm measured on a 35 mil (6.4mm) cured plaque on a BRINKMAN AC Dielectric Tester using EXXON Univolt N61 transformer oil; and
(6) Density < 1.5 g/cm$^3$ measured according to ASTM D792.

**Patentansprüche**

1. Eine Zusammensetzung, beinhaltend in Gewichtsprozent, bezogen auf das Gewicht der Zusammensetzung:

(A) 60-95 % eines Ethylenpolymers einer Kristallinität von weniger als 40 %, wie gemäß ASTM D3418 gemessen;
(B) 4 bis weniger als 40 % eines Propylenpolymers mit einem oberen Schmelzpunkt von größer als oder gleich ($\geq$) 130 °C, wie gemäß ASTM D3418 gemessen; und
(C) $\geq$ 0,5 % Peroxid;

mit der Maßgabe, dass das Ethylenpolymer entweder eine kontinuierliche Phase beinhaltet, innerhalb derer das Propylenpolymer dispergiert ist, oder mit dem Propylenpolymer co-kontinuierlich ist, wobei die Zusammensetzung nach dem Vernetzen einen Gelgehalt von größer als oder gleich ($\geq$) 60 % aufweist, wie mittels Extraktion mit Decahydronaphthalin gemäß ASTM D2765 gemessen.

2. Zusammensetzung gemäß Anspruch 1, wobei das Ethylenpolymer ein mit einem Katalysator eingeschränkter Geometrie oder einem Metallocen-Katalysator hergestelltes Ethylenpolymer ist.

3. Zusammensetzung gemäß Anspruch 2, wobei das Propylenpolymer ein schlagfestes Copolymer-Polypropylen ist.

4. Zusammensetzung gemäß Anspruch 2, wobei das Propylenpolymer ein isotaktisches Polypropylen-Homopolymer ist.

5. Zusammensetzung gemäß Anspruch 1, ferner beinhaltend ein Kompatibilisierungsmittel.

6. Zusammensetzung gemäß Anspruch 1, die frei von einem Kompatibilisierungsmittel ist.

7. Ein vernetzter Isoliermantel für ein Kabel, wobei der vernetzte Isoliermantel aus einer Zusammensetzung hergestellt ist, die, in Gewichtsprozent, bezogen auf das Gewicht der Zusammensetzung, Folgendes beinhaltet;

(A) 60-95 % eines Ethylenpolymers einer Kristallinität von weniger als 40 %, wie gemäß ASTM D3418 gemessen;
(B) 4 bis weniger als 40 % eines Propylenpolymers mit einem oberen Schmelzpunkt von größer als oder gleich ($\geq$) 130 °C, wie gemäß ASTM D3418 gemessen; und
(C) $\geq$ 0,5 % Peroxid;

mit der Maßgabe, dass das Ethylenpolymer entweder eine kontinuierliche Matrix beinhaltet, innerhalb derer das Propylenpolymer dispergiert ist, oder mit dem Propylenpolymer co-kontinuierlich ist, wobei die Zusammensetzung nach dem Vernetzen einen Gelgehalt von größer als oder gleich ($\geq$) 60 % aufweist, wie mittels Extraktion mit Decahydronaphthalin gemäß ASTM D2765 gemessen.

8. Ein Kabel, beinhaltend einen Isoliermantel gemäß Anspruch 7.

9.  Zusammensetzung gemäß Anspruch 1, in der das Ethylenpolymer ein Ethylen/α-Olefin-Interpolymer ist, das Ethylen und 5 Gew.-% bis weniger als 50 Gew.-% α-Olefin, bezogen auf das Gewicht des Interpolymers, beinhaltet.

10. Zusammensetzung gemäß Anspruch 1, in der die Zusammensetzung 0,5 Gew.-% bis 10 Gew.-% des Peroxids beinhaltet.

11. Vernetzte Zusammensetzung gemäß Anspruch 1, in der die Zusammensetzung die folgenden Eigenschaften aufweist:

> (1) Gelgehalt > 60 %, wie mittels Extraktion mit Decahydronaphthalin gemäß ASTM D2765 gemessen;
> (2) Biegemodul, 2 % Sekante < 16.000 psi (110 MPa), gemessen gemäß ASTM D790;
> (3) thermisches Kriechen (150 °C) < 175 %, gemessen gemäß ICEA-T-28-562-2003;
> (4) Verlustfaktor (DF) bei 130 °C, 60 Hz < 5 %, gemessen gemäß ASTM D150;
> (5) Wechselstrom-Spannungsfestigkeit (nicht gealtert und gealtert) > 28 kV/mm, gemessen auf einer 35 mil (6,4 mm) gehärteten Platte auf einem Wechselstrom-Dielektrikum-Prüfgerät von BRINKMAN unter Verwendung des Transformatorenöls Univolt N61 von EXXON; und
> (6) Dichte < 1,5 g/cm$^3$, gemessen gemäß ASTM D792.

**Revendications**

1.  Une composition comprenant en pourcentage en poids rapporté au poids de la composition :

> (A) de 60 à 95 % d'un polymère d'éthylène de cristallinité de moins de 40 % telle que mesurée par la norme ASTM D3418 ;
> (B) de 4 à moins de 40 % d'un polymère de propylène avec un point de fusion maximal supérieur ou égal (≥) à 130 °C tel que mesuré par la norme ASTM D3418 ; et
> (C) ≥ 0,5 % de peroxyde ;

> à condition que le polymère d'éthylène soit comprenne une phase continue au sein de laquelle le polymère de propylène est dispersé, soit qu'il soit co-continu avec le polymère de propylène, la composition ayant une teneur en gel supérieure ou égale (≥) à 60 % après réticulation telle que mesurée par extraction avec du décahydronaphtalène conformément à la norme ASTM D2765.

2.  La composition de la revendication 1 dans laquelle le polymère d'éthylène est un polymère d'éthylène fabriqué avec un catalyseur à géométrie limitée ou un catalyseur métallocène.

3.  La composition de la revendication 2 dans laquelle le polymère de propylène est un copolymère polypropylène choc.

4.  La composition de la revendication 2 dans laquelle le polymère de propylène est un homopolymère polypropylène isostatique.

5.  La composition de la revendication 1 comprenant en outre un agent compatibilisant.

6.  La composition de la revendication 1 exempte d'un agent compatibilisant.

7.  Une gaine d'isolation réticulée pour un câble, la gaine d'isolation réticulée fabriquée à partir d'une composition comprenant en pourcentage en poids rapporté au poids de la composition :

> (A) de 60 à 95 % d'un polymère d'éthylène de cristallinité de moins de 40 % telle que mesurée par la norme ASTM D3418 ;
> (B) de 4 à moins de 40 % d'un polymère de propylène avec un point de fusion maximal supérieur ou égal (≥) à 130 °C tel que mesuré par la norme ASTM D3418 ; et
> (C) ≥ 0,5 % de peroxyde ;

> à condition que soit le polymère d'éthylène comprenne une matrice continue au sein de laquelle le polymère de propylène est dispersé, soit qu'il soit co-continu avec le polymère de propylène, la composition ayant une teneur en gel supérieure ou égale (≥) à 60 % après réticulation, telle que mesurée par extraction avec du décahydronaphtalène conformément à la norme ASTM D2765.

8. Un câble comprenant une gaine d'isolation de la revendication 7.

9. La composition de la revendication 1 dans laquelle le polymère d'éthylène est un interpolymère d'éthylène et d' α-oléfine comprenant de l'éthylène et de 5 % en poids à moins de 50 % en poids d' α-oléfine, rapporté au poids de l'interpolymère.

10. La composition de la revendication 1, la composition comprenant de 0,5 % en poids à 10 % en poids du peroxyde.

11. La composition réticulée de la revendication 1, la composition ayant les propriétés suivantes :

(1) teneur en gel > 60 % telle que mesurée par extraction avec du décahydronaphtalène conformément à la norme ASTM D2765 ;
(2) module de flexion, sécant à 2 % < 16 000 psi (110 MPa) mesuré conformément à la norme ASTM D790 ;
(3) fluage à chaud (150 °C) < 175 % mesuré conformément à la norme ICEA-T-28-562-2003 ;
(4) facteur de dissipation (FD) à 130 °C, 60 Hz < 5 % mesuré conformément à la norme ASTM D150 ;
(5) résistance à la rupture à CA (vieilli et non vieilli) > 28 kV/mm mesurée sur une plaque durcie de 35 mils (6,4 mm) sur un appareil d'essai diélectrique à CA BRINKMAN en utilisant de l'huile de transformateur EXXON Univolt N61 ; et
(6) masse volumique < 1,5 g/cm$^3$ mesurée conformément à la norme ASTM D792.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007019088 A
- US 20100122833 A1
- US 5246783 A
- US 6496629 B
- US 6714707 B
- US 5340840 A
- US 5272236 A
- US 5278272 A
- US 5986028 A
- US 6492465 B
- US 5346961 A
- US 4018852 A

**Non-patent literature cited in the description**

- Modern Plastics Encyclopedia/89. October 1988, vol. 65, 86-92
- **UTRACKI, L. A.** *The Canadian Journal of Chemical Engineering,* December 2002, vol. 80, 1008-1016